# EUROPEAN PATENT APPLICATION

(11) **EP 4 199 475 A1**
(43) Date of publication of application: **21.06.2023**
(21) Application number: 21868549.3
(22) Date of filing: 09.09.2021
(51) Int. Cl.: H04L 67/00

(54) **DATA OFFLOADING METHOD AND DEVICE**

(30) Priority: 16.09.2020 CN 202010976179
(71) Applicant: Huawei Technologies Co., Ltd., Shenzhen, Guangdong 518129 (CN)
(72) Inventor: HU, Xiang, Shenzhen, Guangdong 518129 (CN)
(74) Representative: Pfenning, Meinig & Partner mbB
(86) International application number: PCT/CN2021/117510
(87) International publication number: WO 2022/057724

(57) **Abstract**

Embodiments of this application provide a data steering method and an apparatus. The method includes: An MEP sends a traffic steering rule of an APP to a UPF network element, where the APP is installed on the MEP, and the traffic steering rule of the APP includes an IP address and/or a port number corresponding to the APP, and a steering action corresponding to the IP address and/or the port number; and the MEP receives service data that is steered by the UPF network element to the APP based on the traffic steering rule of the APP. The steered service data is processed by the APP. In the method, the traffic steering rule is delivered only for a specific session, and does not cause a signaling storm, thereby reducing impact resulting from updating of the traffic steering rule on a network.

## Description

This application claims priority to Chinese Patent Application No. 202010976179.X, filed with the China National Intellectual Property Administration on September 16, 2020 and entitled "DATA STEERING METHOD AND APPARATUS", which is incorporated herein by reference in its entirety.

### TECHNICAL FIELD

This application relates to the field of communication technologies, and in particular, to a data steering method and an apparatus.

### BACKGROUND

As evolution of cloud computing, mobile edge computing (mobile edge computing, MEC) sinks application hosting from a centralized data center to a network edge, which is closer to data generated by consumers and applications. The MEC provides Internet technologies (internet technology, IT) and cloud computing capabilities at the network edge close to mobile users, and profits from network capability exposure to obtain advantages of high bandwidth, low latency, and near-end deployment. Some service processing and resource scheduling of applications, content, and mobile broad band (mobile broad band, MBB) services can be deployed at a network edge close to an access network by using MEC. This improves network performance by processing services close to users.

In the conventional technology, a new uplink classifier (uplink classifier, ULCL) may be inserted between a radio access network (radio access network, RAN) and a protocol data unit (protocol data unit, PDU) session anchor user plane function (user plane function, UPF) network element. The ULCL steers data to a local data network (data network, DN) or a remote UPF session anchor based on an identification and steering policy for an uplink characteristic of a service flow. For a steering policy on the ULCL, the steering policy is carried by an application function (application function, AF) network element via a traffic influence capability exposure message of a network exposure function (network exposure function, NEF). However, in this architecture, when each APP goes online, a policy control function (policy control function, PCF) network element initiates a policy update process for all sessions that meet a condition. As a result, the PCF pushes a new policy message to a session management function (session management function, SMF) network element over an N7 interface, and the SMF updates a message of a UPF session over an N4 interface, thereby causing a large amount of signaling transmission and increasing network load.

Therefore, an update manner of the steering policy of the AF cannot be directly used in an MEC platform (MEC platform, MEP).

### SUMMARY

This application provides a data steering method and an apparatus, so that a traffic steering rule of an APP for data steering is delivered in a targeted manner, thereby avoiding a signaling storm caused by delivery of the traffic steering rule, and reducing impact resulting from the delivery of the traffic steering rule on a network.

A first aspect of this application provides a data steering method, including:
An MEP sends a traffic steering rule of an APP to a UPF network element. The APP is installed on the MEP, and the traffic steering rule includes an IP address and/or a port number corresponding to the APP, and a steering action corresponding to the IP address and/or the port number.

The MEP receives service data that is steered by the UPF network element to the APP based on the traffic steering rule of the APP.

Optionally, before the MEP receives the service data that is steered by the UPF network element to the APP based on the traffic steering rule of the APP, the MEP triggers the UPF network element to activate the traffic steering rule of the APP.

In a possible implementation, that the MEP sends the traffic steering rule of the APP to the UPF network element includes:
The MEP sends the traffic steering rule of the APP through a first interface between the MEP and the UPF network element. The traffic steering rule of the APP further includes an identifier of the traffic steering rule.

That the MEP triggers the UPF network element to activate the traffic steering rule of the APP includes:
The MEP sends an identifier of a to-be-activated traffic steering rule and first information to a PCF network element through a network exposure function NEF network element. The first information is used by the PCF network element to determine an effective scope of the to-be-activated traffic steering rule.

In another possible implementation, that the MEP sends the traffic steering rule of the APP to the UPF network element includes:
The MEP sends a fifth message to a PCF network element through a network exposure function NEF network element. The fifth message includes the traffic steering rule of the APP and first information, and the first information is used by the PCF network element to determine an effective scope of the traffic steering rule of the APP.

That the MEP triggers the UPF to activate the traffic steering rule of the APP includes:
The MEP triggers, by using the fifth message, the UPF to activate the traffic steering rule of the APP

In a possible implementation, after the MEP sends the traffic steering rule of the APP through the first interface between the MEP and the UPF network element, the method further includes: The MEP receives first indication information sent by the UPF network element through the first interface. The first indication information indicates that the UPF network element receives the traffic steering rule of the APP.

In a possible implementation, the method further includes: The MEP receives second indication information sent by an SMF network element. The second indication information indicates that the traffic steering rule of the APP is activated.

In a possible implementation, the method further includes: The MEP performs service registry and authentication with the UPF network element.

In a possible implementation, the method further includes: The MEP performs service registry and authentication with the NEF network element via an MEP manager.

In a possible implementation, the method further includes: The MEP sends an update message to the PCF network element via the NEF network element. The update message is for updating a matching condition and/or an effective scope of the traffic steering rule of the APP.

In a possible implementation, the method further includes: The MEP sends a deletion message to the PCF network element via the NEF network element. The deletion message is for deleting the traffic steering rule of the APP.

In a possible implementation, that the MEP sends the traffic steering rule of the APP to the UPF network element includes:
The MEP sends a second message to the UPF network element through a first interface between the MEP and the UPF network element. The second message includes the traffic steering rule of the APP, and the traffic steering rule of the APP further includes an identifier of the traffic steering rule.

That the MEP triggers the UPF network element to activate the traffic steering rule of the APP includes:
The MEP sends a third message to the UPF network element through the first interface. The third message is for activating a traffic steering rule of the APP, and the third message includes an identifier of the to-be-activated traffic steering rule of the APP.

In a possible implementation, the third message further includes first information, and the first information is used by the UPF network element to determine an effective scope of the to-be-activated traffic steering rule.

In a possible implementation, that the MEP sends the traffic steering rule of the APP to the UPF network element includes:

The MEP sends a fourth message to the UPF network element through a first interface between the MEP and the UPF network element. The fourth message includes the traffic steering rule of the APP.

That the MEP triggers the UPF network element to activate the traffic steering rule of the APP includes:
The MEP triggers, by using the fourth message, the UPF network element to activate the traffic steering rule of the APP.

In a possible implementation, the fourth message further includes first information, and the first information is used by the UPF network element to determine an effective scope of the to-be-activated traffic steering rule.

In a possible implementation, the fourth message further includes activation indication information, and the activation indication information indicates to activate the traffic steering rule of the APP.

In a possible implementation, the method further includes: The MEP receives, through the first interface, third indication information sent by the UPF network element. The third indication information indicates that the traffic steering rule of the APP is activated.

In a possible implementation, the method further includes: The MEP performs service registry and authentication with the UPF network element.

In a possible implementation, the first information includes location information of the MEP and/or information about a service to be accessed by a UE.

In a possible implementation, the information about the service to be accessed by the UE includes a data network name DNN and a slice instance ID or single network slice selection assistance information S-NSSAI.

In a possible implementation, the method further includes: The MEP sends an update message to the UPF network element through the first interface. The update message is for updating the traffic steering rule of the APP and/or an effective scope of the traffic steering rule of the APP.

In a possible implementation, the method further includes: The MEP sends a deletion message to the UPF network element through the first interface. The deletion message is for deleting the traffic steering rule of the APP.

A second aspect of this application provides a data steering method, including:
A user plane function UPF network element obtains a traffic steering rule of an application APP. The APP is installed on an MEP, and the traffic steering rule of the APP includes an IP address and/or a port number corresponding to the APP and a steering action corresponding to the IP address and/or the port number.

The UPF network element sends, when receiving service data sent by user equipment, the service data to the APP based on an IP address and/or a port number of the service data and the traffic steering rule of the APP.

Optionally, before the service data is sent to the APP based on the IP address and/or the port number of the service data and the traffic steering rule of the APP, the UPF network element activates the traffic steering rule of the APP.

In a possible implementation, that the UPF network element obtains the traffic steering rule of the APP includes:
The UPF network element receives a traffic steering rule of the APP through a first interface between the UPF network element and the MEP. The traffic steering rule of the APP further includes an identifier of the traffic steering rule.

That the UPF network element activates the traffic steering rule of the APP includes:
The UPF network element receives an activation message sent by a PCF network element. The activation message is for activating the traffic steering rule of the APP, and the activation message includes an identifier of the traffic steering rule of the APP.

The UPF network element activates the traffic steering rule of the APP based on the activation message.

In a possible implementation, that the UPF network element obtains the traffic steering rule of the APP includes:
The UPF network element receives the traffic steering rule of the APP sent by a PCF network element. The traffic steering rule of the APP further includes an identifier of the traffic steering rule, and the traffic steering rule of the APP is generated by the PCF network element, or the traffic steering rule of the APP is generated by the MEP and sent to the PCF network element.

That the UPF network element activates the traffic steering rule of the APP includes:

The UPF network element receives an activation message sent by the PCF network element. The activation message is for activating the traffic steering rule of the APP, and the activation message includes an identifier of the traffic steering rule of the APP.

The UPF network element activates the traffic steering rule of the APP based on the activation message.

In a possible implementation, the activation message further includes first information, and the first information is used by the UPF network element to determine an effective scope of a to-be-activated traffic steering rule.

In a possible implementation, the method further includes: The UPF network element receives an update message sent by the PCF network element. The update message is for updating the traffic steering rule of the APP and/or the effective scope of the traffic steering rule of the APP.

In a possible implementation, the method further includes: The UPF network element receives a deletion message sent by the PCF network element. The deletion message is for deleting the traffic steering rule of the APP.

In a possible implementation, that the UPF network element obtains the traffic steering rule of the APP includes:
The UPF network element receives, through a first interface between the UPF network element and the MEP, a second message sent by the MEP. The second message includes the traffic steering rule of the APP, and the traffic steering rule of the APP further includes an identifier of the traffic steering rule.

That the UPF network element activates the traffic steering rule of the APP includes:
The UPF network element receives, through the first interface, a third message sent by the MEP. The third message is for activating the traffic steering rule of the APP, and the third message includes an identifier of the to-be-activated traffic steering rule of the APP.

The UPF network element activates the traffic steering rule of the APP based on the third message.

In a possible implementation, the third message further includes first information, and the first information is used by the UPF network element to determine an effective scope of the to-be-activated traffic steering rule.

In a possible implementation, that the UPF network element obtains the traffic steering rule of the APP includes:
The UPF network element receives, through a first interface between the UPF network element and the MEP, a fourth message sent by the MEP. The fourth message includes the traffic steering rule of the APP.

That the UPF network element activates the traffic steering rule of the APP includes:
The UPF network element activates the traffic steering rule of the APP based on the fourth message.

In a possible implementation, the fourth message further includes first information, and the first information is used by the UPF network element to determine an effective scope of the to-be-activated traffic steering rule.

In a possible implementation, the method further includes: The UPF network element receives, through the first interface, an update message sent by the MEP. The update message is for updating the traffic steering rule of the APP and/or an effective scope of the traffic steering rule of the APP.

In a possible implementation, the method further includes: The UPF network element receives, through the first interface, a deletion message sent by the MEP. The deletion message is for deleting the traffic steering rule of the APP.

In a possible implementation, the first information includes location information of the MEP and/or information about a service to be accessed by the UE.

In a possible implementation, the information about the service to be accessed by the UE includes a data network name DNN and a slice instance ID or single network slice selection assistance information S-NSSAI.

A third aspect of this application provides a data steering method, including:
The PCF network element receives, from an NEF network element, a first message sent by a mobile edge computing platform MEP. The first message includes an identifier of a to-be-activated traffic steering rule of an APP and first information.

The PCF network element determines an effective scope of the traffic steering rule of the APP based on the first information.

The PCF network element sends an activation message to an SMF network element. The activation message includes an identifier of the to-be-activated traffic steering rule of the APP and information about the effective scope of the traffic steering rule of the APP.

In a possible implementation, the first information includes location information of the MEP and/or information about a service to be accessed by a UE.

In a possible implementation, the information about the service to be accessed by the UE includes a data network name DNN and a slice instance ID or single network slice selection assistance information S-NSSAI.

In a possible implementation, the method further includes: The PCF network element generates the traffic steering rule of the APP, and the PCF network element sends the traffic steering rule of the APP to a user plane function UPF network element.

In a possible implementation, the method further includes: The PCF network element receives the traffic steering rule of the APP sent by the MEP, and the PCF network element sends the traffic steering rule of the APP to a UPF network element.

A fourth aspect of this application provides an MEP, including:
a sending module, configured to send a traffic steering rule of an application APP to a UPF network element, where the APP is installed on the MEP, and the traffic steering rule of the APP includes an IP address and/or a port number corresponding to the APP, and a steering action corresponding to the IP address and/or the port number; and
a receiving module, configured to receive service data that is steered by the UPF network element to the APP based on the traffic steering rule of the APP.

Optionally, the MEP further includes a triggering module, configured to trigger the UPF network element to activate the traffic steering rule of the APP.

In a possible implementation, the sending module is specifically configured to send the traffic steering rule of the APP through a first interface between the MEP and the UPF network element, where the traffic steering rule of the APP further includes an identifier of the traffic steering rule.

The triggering module is specifically configured to send an identifier of a to-be-activated traffic steering rule and first information to a policy control function PCF network element via a network exposure function NEF network element, where the first information is used by the PCF network element to determine an effective scope of the to-be-activated traffic steering rule.

In another possible implementation, the sending module is specifically configured to send a fifth message to a policy control function PCF network element through a network exposure function NEF network element, where the fifth message includes the traffic steering rule of the APP and first information, and the first information is used by the PCF network element to determine an effective scope of the traffic steering rule of the APP.

The triggering module is specifically configured to trigger, by using the fifth message, the UPF to activate the traffic steering rule of the APP.

In a possible implementation, the receiving module is further configured to receive first indication information sent by the UPF network element through the first interface, where the first indication information indicates that the UPF network element receives the traffic steering rule of the APP.

In a possible implementation, the receiving module is further configured to receive second indication information sent by an SMF network element, where the second indication information indicates that the traffic steering rule of the APP is activated.

In a possible implementation, the MEP further includes an authentication module, configured to perform service registry and authentication with the UPF network element.

In a possible implementation, the authentication module is further configured to perform service registry and authentication with the NEF network element via an MEP manager.

In a possible implementation, the sending module is further configured to send an update message to the PCF network element via the NEF network element, where the update message is for updating the traffic steering rule of the APP and/or an effective scope of the traffic steering rule of the APP.

In a possible implementation, the sending module is further configured to send a deletion message to the PCF network element via the NEF network element, where the deletion message is for deleting the traffic steering rule of the APP.

In a possible implementation, the sending module is specifically configured to send a second message to the UPF network element through a first interface between the MEP and the UPF network element, where the second message includes the traffic steering rule of the APP, and the traffic steering rule of the APP further includes an identifier of the traffic steering rule.

The triggering module is specifically configured to send a third message to the UPF network element through the first interface, where the third message is for activating the traffic steering rule of the APP, and the third message includes an identifier of the to-be-activated traffic steering rule of the APP.

In a possible implementation, the third message further includes first information, and the first information is used by the UPF network element to determine an effective scope of the to-be-activated traffic steering rule.

In a possible implementation, the sending module is specifically configured to send a fourth message to the UPF network element through a first interface between the MEP and the UPF network element, where the fourth message includes the traffic steering rule of the APP.

The triggering module is specifically configured to trigger, by using the fourth message, the UPF network element to activate the traffic steering rule of the APP.

In a possible implementation, the fourth message further includes first information, and the first information is used by the UPF network element to determine an effective scope of the to-be-activated traffic steering rule.

In a possible implementation, the fourth message further includes activation indication information, and the activation indication information indicates to activate the traffic steering rule of the APP.

In a possible implementation, the receiving module is further configured to receive, through the first interface, third indication information sent by the UPF network element, where the third indication information indicates that the traffic steering rule of the APP is activated.

In a possible implementation, the MEP further includes an authentication module, configured to perform service registry and authentication with the UPF network element.

In a possible implementation, the first information includes location information of the MEP and/or information about a service to be accessed by a UE.

In a possible implementation, the information about the service to be accessed by the UE includes a data network name DNN and a slice instance ID or single network slice selection assistance information S-NSSAI.

In a possible implementation, the sending module is further configured to send an update message to the UPF network element through the first interface, where the update message is for updating a matching condition and/or an effective scope of the traffic steering rule of the APP.

In a possible implementation, the sending module is further configured to send a deletion message to the UPF network element through the first interface, where the deletion message is for deleting the traffic steering rule of the APP.

A fifth aspect of this application provides a UPF network element, including:
an obtaining module, configured to obtain a traffic steering rule of an application APP, where the APP is installed on an MEP, and the traffic steering rule of the APP includes an IP address and/or a port number corresponding to the APP, and a steering action corresponding to the IP address and/or the port number; and
a sending module, configured to send, when the UPF network element receives service data sent by user equipment, the service data to the APP based on an IP address and/or a port number of the service data and the traffic steering rule of the APP

Optionally, the UPF network element further includes an activation module, configured to activate the traffic steering rule of the APP.

In a possible implementation, the obtaining module is specifically configured to receive the traffic steering rule of the APP through a first interface between the UPF network element and the MEP, where the traffic steering rule of the APP further includes an identifier of the traffic steering rule.

The activation module is specifically configured to receive an activation message sent by a PCF network element, where the activation message is for activating the traffic steering rule of the APP, and the activation message includes an identifier of the traffic steering rule of the APP; and activate the traffic steering rule of the APP based on the activation message.

In a possible implementation, the obtaining module is specifically configured to receive the traffic steering rule of the APP sent by a PCF network element, where the traffic steering rule of the APP further includes an identifier of the traffic steering rule, and the traffic steering rule of the APP is generated by the PCF network element, or the traffic steering rule of the APP is generated by the mobile edge computing platform and sent to the PCF network element.

The activation module is specifically configured to receive an activation message sent by the PCF network element, where the activation message is for activating the traffic steering rule of the APP, and the activation message includes an identifier of the traffic steering rule of the APP; and activate the traffic steering rule of the APP based on the activation message.

In a possible implementation, the activation message further includes first information, and the first information is used by the UPF network element to determine an effective scope of the to-be-activated traffic steering rule.

In a possible implementation, the UPF network element further includes a receiving module, configured to receive an update message sent by the PCF network element, where the update message is for updating the traffic steering rule of the APP and/or the effective scope of the traffic steering rule of the APP.

In a possible implementation, the UPF network element further includes a receiving module, configured to receive a deletion message sent by the PCF network element, where the deletion message is for deleting the traffic steering rule of the APP.

In a possible implementation, the obtaining module is specifically configured to receive, through a first interface between the UPF network element and the MEP, a second message sent by the MEP, where the second message includes the traffic steering rule of the APP, and the traffic steering rule of the APP further includes an identifier of the traffic steering rule.

The activation module is specifically configured to receive, through the first interface, a third message sent by the MEP, where the third message is for activating the traffic steering rule of the APP, and the third message includes an identifier of a to-be-activated traffic steering rule of the APP; and activate the traffic steering rule of the APP based on the third message.

In a possible implementation, the third message further includes first information, and the first information is used by the UPF to determine an effective scope of the to-be-activated traffic steering rule.

In a possible implementation, the obtaining module is specifically configured to receive, through a first interface between the UPF network element and the MEP, a fourth message sent by the MEP, where the fourth message includes the traffic steering rule of the APP.

The activation module is specifically configured to activate the traffic steering rule of the APP based on the fourth message.

In a possible implementation, the fourth message further includes first information, and the first information is used by the UPF to determine an effective scope of the to-be-activated traffic steering rule.

In a possible implementation, the UPF network element further includes a receiving module, configured to receive, through the first interface, an update message sent by the MEP, where the update message is for updating the traffic steering rule of the APP and/or an effective scope of the traffic steering rule of the APP.

In a possible implementation, the UPF network element further includes a receiving module, configured to receive, through the first interface, a deletion message sent by the MEP, where the deletion message is for deleting the traffic steering rule of the APP.

In a possible implementation, the first information includes location information of the MEP and/or information about a service to be accessed by the UE.

In a possible implementation, the information about the service to be accessed by the UE includes a data network name DNN and a slice instance ID or single network slice selection assistance information S-NSSAI.

A sixth aspect of this application provides a PCF network element, including:
a receiving module, configured to receive, from an NEF network element, a first message sent by an MEP, where the first message includes an identifier of a to-be-activated traffic steering rule of an APP and first information;
a determining module, configured to determine an effective scope of the traffic steering rule of the APP based on the first information; and
a sending module, configured to send an activation message to an SMF network element, where the activation message includes the identifier of the to-be-activated traffic steering rule of the APP and information about the effective scope of the traffic steering rule of the APP.

In a possible implementation, the first information includes location information of the MEP and/or information about a service to be accessed by a UE.

In a possible implementation, the information about the service to be accessed by the UE includes a data network name DNN and a slice instance ID or single network slice selection assistance information S-NSSAI.

In a possible implementation, the PCF network element further includes a generation module, configured to generate the traffic steering rule of the APP, and the sending module is further configured to send the traffic steering rule of the APP to a user plane function UPF network element.

In a possible implementation, the receiving module is further configured to receive the traffic steering rule of the APP sent by the MEP, and the PCF network element sends the traffic steering rule of the APP to a UPF network element.

A seventh aspect of this application provides an MEP, including a processor, a memory, and a transceiver. The memory is configured to store instructions, the transceiver is configured to communicate with another device, and the processor is configured to execute the instructions stored in the memory, to enable the MEP to perform the method according to the first aspect and the example manners of this application.

An eighth aspect of this application provides a UPF network element, including a processor, a memory, and a transceiver. The memory is configured to store instructions, the transceiver is configured to communicate with another device, and the processor is configured to execute the instruction stored in the memory, to enable the UPF network element to perform the method according to the second aspect and the example manners of this application.

A ninth aspect of this application provides a PCF network element, including a processor, a memory, and a transceiver. The memory is configured to store instructions, the transceiver is configured to communicate with another device, and the processor is configured to execute the instructions stored in the memory, to enable the PCF network element to perform the method according to the third aspect and the example manners of this application.

A tenth aspect of this application provides a computer-readable storage medium. The computer-readable storage medium stores instructions, and when the instructions are executed, a computer is enabled to perform any method according to the first aspect, the second aspect, the third aspect, and the example manners of this application.

An eleventh aspect of this application provides a computer program product, used in an MEP. The computer program product includes instructions, and when the instructions are executed by a computing apparatus, the MEP is enabled to perform the method according to the first aspect or the example manners of the first aspect of this application.

A twelfth aspect of this application provides a computer program product, used in a UPF network element. The computer program product includes instructions, and when the instructions are executed by a computing apparatus, the UPF network element is enabled to perform the method according to the second aspect or the example manners of the second aspect of this application.

A thirteen aspect of this application provides a computer program product, used in a PCF network element. The computer program product includes instructions, and when the instructions are executed by a computing apparatus, the PCF network element is enabled to perform the method according to the third aspect or the example manners of the third aspect of this application.

A fourteenth aspect of this application provides a communication system. The communication system includes an MEP and a UPF network element. The MEP is configured to perform the method according to the first aspect or the example manners of the first aspect. The UPF network element is configured to perform the method according to the second aspect or the example manners of the second aspect.

Optionally, the communication system further includes a PCF network element, and the PCF network element is configured to perform the method according to the third aspect or the example manners of the third aspect.

Optionally, the communication system further includes an NEF network element and an SMF network element.

Embodiments of this application provide the data steering method and the apparatus. The MEP sends the traffic steering rule of the APP to the UPF network element. The APP is installed on the MEP, and the traffic steering rule of the APP includes the IP address and/or the port number corresponding to the APP, and the steering action corresponding to the IP address and/or the port number. The MEP receives the service data that is steered by the UPF network element to the APP based on the traffic steering rule of the APP, and the APP processes the steered service data. In the embodiments, the traffic steering rule is delivered only for a specific session, and does not cause a signaling storm, thereby reducing impact resulting from updating of the traffic steering rule on a network.

### BRIEF DESCRIPTION OF DRAWINGS

FIG. 1 is a schematic diagram of a 5G network architecture;
FIG. 2 is a schematic diagram of an MEC system architecture;
FIG. 3 is a flowchart of a data steering method according to Embodiment 1 of this application;
FIG. 4A and FIG. 4B are a signaling flowchart of a data steering method according to Embodiment 2 of this application;
FIG. 5 is a signaling flowchart of a data steering method according to Embodiment 3 of this application;
FIG. 6A and FIG. 6B are a signaling flowchart of a data steering method according to Embodiment 4 of this application;
FIG. 7 is a schematic diagram of a structure of an MEP according to Embodiment 8 of this application;
FIG. 8 is a schematic diagram of a structure of a UPF network element according to Embodiment 9 of this application; and
FIG. 9 is a schematic diagram of a structure of a PCF network element according to Embodiment 10 of this application.

### DESCRIPTION OF EMBODIMENTS

Embodiments of this application provide a data steering method, which may be used in an MEC system. MEC is an edge cloud platform, provides a new network architecture in combination with an operator network (where a data plane function is a combination point), and provides, via a radio access network, IT services and a cloud computing function that are required by telecom users nearby, to create a carrier-class service environment with high performance, low latency, and high bandwidth. This provides consumers with high-quality service experience.

A local steering capability is a core capability of the MEC. For application scenarios such as local computing or enterprise campuses, a problem of how to flexibly and efficiently steer a service data flow locally and access a nearest network needs to be resolved first. In a 5G-oriented UPF solution, steering is implemented through a ULCL or a branch-point (branch-point, BP) on the UPF.

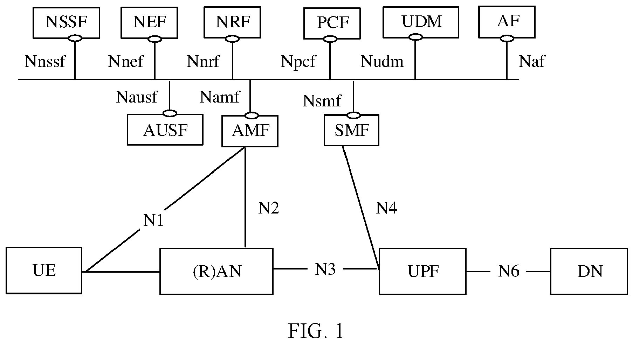

FIG. 1 is a schematic diagram of a 5G network architecture. A 5G system is also referred to as a new wireless communication system, a new access technology (New Radio, NR), or a next-generation mobile communication system. The 5G system includes user equipment (user equipment, UE), a (radio) access network (radio access network, (R)AN), and a 5G core network.

The 5G core network includes a plurality of functional units: an access and mobility management function (access and mobility management function, AMF) network element, a session management function (session management function, SMF) network element, a user plane function (user plane function, UPF) network element, an authentication server function (authentication server function, AUSF) network element, a policy control function (policy control function, PCF) network element, an application function (application function, AF) network element, a unified data management (unified data management, UDM) function network element, and a network slice selection function (network slice selection function, NSSF) network element.

The AMF network element is mainly responsible for services such as mobility management and access management. The SMF network element is mainly responsible for session management, UE address management and assignment, a dynamic host configuration protocol function, selection and control of a user plane function, and the like. The UPF network element is mainly responsible for external connection to a DN and data packet routing and forwarding of a user plane, packet filtering, execution of a quality of service (quality of service, QoS) control-related function, and the like. The AUSF network element is mainly responsible for an authentication function for a terminal device, and the like. The PCF network element is mainly responsible for providing a unified policy framework for network behavior management, providing a policy rule of a control plane function, obtaining registration information related to a policy decision, and the like. Notably, these functional units may independently operate, or may be combined to implement some control functions, for example, access control and mobility management functions such as access authentication, security encryption, and location registration of the terminal device, and session management functions such as establishment, release, and change of a user plane transmission path.

Functional units in a 5GC may communicate with each other through a next generation network (next generation, NG) interface. For example, the UE may transmit a control plane message to the AMF network element through an NG interface 1 (N1 for short), a RAN device may establish a user plane data transmission channel to the UPF network element through an NG interface 3 (N3 for short), the AN/RAN device may establish a control plane signaling connection to the AMF network element through an NG interface 2 (N2 for short), the UPF network element may exchange information with the SMF network element through an NG interface 4 (N4 for short), the UPF network element may exchange user plane data with the data network DN through an NG interface 6 (N6 for short), the AMF network element may exchange information with the SMF network element through an NG interface 11 (N11 for short), the SMF network element may exchange information with the PCF through an NG interface 7 (N7 for short), and the AMF network element may exchange information with the AUSF network element through an NG interface 12 (N12 for short). Notably, FIG. 1 is merely an example architectural diagram. In addition to the functional units shown in FIG. 1, the network architecture may further include another functional unit.

The network architecture is not limited to a network architecture based on a reference point, and may alternatively be a network architecture based on a service-based interface. The architecture shown in FIG. 1 is a network architecture based on a service-based interface. In a scenario based on the service-based interface, the core network of the 5G system further includes a network exposure function (network exposure function, NEF) network element and a network repository function (network repository function, NRF) network element. In the scenario based on the service-based interface, some network elements in the 5G core network are connected through a bus. As shown in FIG. 1, an AUSF network element, an AMF network element, an SMF network element, an AF network element, a UDM network element, a PC network element, and an NSSF network element are interconnected through a bus. When the network elements are interconnected through a bus, service-based interfaces are used. For example, the AUSF network element is connected to the bus through a Nausf interface, the AMF network element is connected to the bus through an Namf interface, the SMF network element is connected to the bus through an Nsmf interface, the AF network element is connected to the bus through an Naf network element interface, the UDM network element is connected to the bus through an Nudm interface, the PCF network element is connected to the bus through an NPCF interface, the NRF network element is connected to the bus through an Nnrf interface, the NEF network element is connected to the bus through an Nnef interface, and the NSSF network element is connected to the bus through an Nnssf interface.

A ULCL can be inserted between a RAN and a PDU session anchor. The PDU session anchor in the 5G system is the UPF network element. The ULCL steers data to the local DN or a remote UPF session anchor based on identification for uplink characteristics of service flows. In addition, the ULCL needs to aggregate downlink flows.

The BP has a same function as the ULCL, except that the BP is a steering point inserted for Internet protocol version 6 (internet protocol version 6, IPV6). IPv6 is different from Internet protocol version 4 (internet protocol version 4, IPV4) in the user plane as follows. For an IPv4 or IPv6 PDU session, the PDU session anchor may be an IP anchor allocated to an IP address/prefix of the UE. For an IPv4 PDU session or a non-multi-homed IPv6 PDU session, when a plurality of PDU session anchors are used, only one PDU session anchor is an IP anchor. However, for a multi-homed IPv6 PDU session, there may be a plurality of IP anchors.

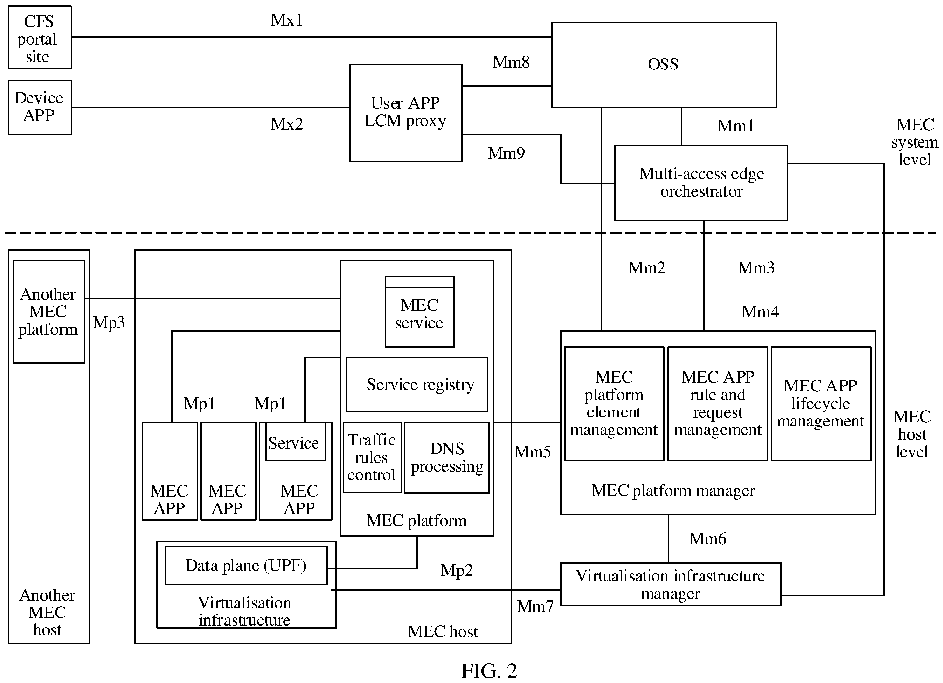

FIG. 2 is a schematic diagram of an MEC system architecture. As shown in FIG. 2, the MEC system includes an MEC system level (MEC system level) and an MEC host level (MEC host level).

The MEC system level includes an operations support system (operations support system, OSS) and a multi-access edge orchestrator (multi-access edge orchestrator). A CFS portal site communicates with the operations support system through an Mx1 interface. A device APP is connected to a user APP LCM proxy (user APP LCM proxy) through an Mx2 interface. The user APP LCM proxy is connected to the operations support system and the multi-access edge orchestrator through an Mm8 interface and an Mm9 interface respectively. The operations support system and the multi-access edge orchestrator communicate with each other through an Mm1 interface. The operations support system is further connected to an MEPM through an Mm2 interface, the multi-access edge orchestrator is connected to the MEPM through an Mm3 interface, and the multi-access edge orchestrator is further connected to the MEPM through an Mm4 interface. The device APP herein is an APP installed on a terminal device (or referred to as user equipment (user equipment, UE)). The terminal device may be a mobile phone, a tablet computer, an in-vehicle device or a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), or a wireless terminal in transportation safety (transportation safety), a wireless terminal in a smart city (smart city), a wireless terminal in a smart home (smart home), or the like. This is not specifically limited in embodiments of this application.

The MEC host level includes an MEC platform manager (MEC platform Manager, MEPM), a virtualisation infrastructure manager (virtualisation infrastructure manager), and one or more MEC hosts.

The MEC host includes an MEC platform (MEC platform, MEP), a plurality of MEC APPs, and a virtualisation infrastructure (virtualisation infrastructure). The MEPM is connected to and communicates with the MEP through an Mm5 interface. Through the Mm5 interface, the MEPM performs MEC APP lifecycle management, MEC APP rule and request management, and MEC platform element management.

The MEP is configured to run an MEC service (MEC service), and perform service registry (service registry), traffic rules control (traffic rules control), DNS processing, and the like.

The MEP has functions of an AF in a 5G network. Functions of the AF in the MEP is implemented through APPs on the MEP (which may also be referred to as MEC APPs). An APP on the UE may access the APPs on the MEP through a network. The MEP communicates with the MEC APPs through Mp 1 interfaces for management of the MEC APPs. Specific services run on the MEC APPs.

The MEP communicates with a user plane (data plane) in the virtualisation infrastructure through an Mp2 interface. The data plan is implemented by using a user plane function (User Plane Function, UPF). Therefore, the Mp2 interface may also be understood as an interface between the MEP and the UPF, and the UPF in the MEC host is a UPF deployed at an edge location. MEPs of two MEC hosts communicate with each other through an Mp3 interface.

In embodiments of this application, the APP on the UE may be understood as a client, the APPs on the MEP may be understood as servers or server sides, and the APP on the UE accesses, through a network, services provided by the APPs on the MEP. Therefore, in embodiments of this application, IP addresses corresponding to the APPs on the MEP may be understood as IP addresses of the servers, and are IP addresses used by the APPs on the MEP to provide the services externally. Similarly, port numbers corresponding to the APPs on the MEP are numbers or identifiers of ports that correspond to the APPs on the MEP and that are for providing the services, and the port numbers corresponding to the APPs on the MEP may be understood as port numbers of the servers.

In embodiments of this application, the MEP has the functions of the AF in the 5G network, and the MEP provides services for user equipment in a form of APPs. It may be understood that the MEP may also provide services for user equipment in another form.

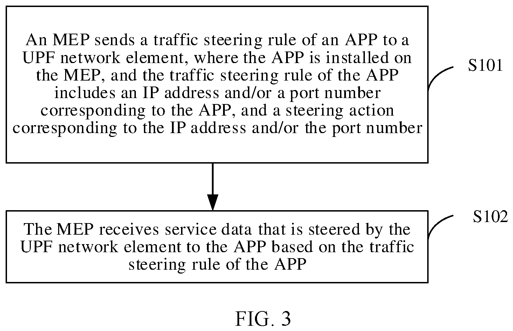

Based on the architectures shown in FIG. 1 and FIG. 2, Embodiment 1 of this application provides a data steering method. As shown in FIG. 3, the data steering method provided in this embodiment may include the following steps.

S101: An MEP sends a traffic steering rule of an APP to a UPF network element, where the APP is installed on the MEP, and the traffic steering rule of the APP includes an IP address and/or a port number corresponding to the APP and a steering action corresponding to the IP address and/or the port number.

The MEP may send the traffic steering rule of the APP to the UPF network element in the case that the traffic steering rule of the APP needs to be updated, for example, in the case that an IP address range corresponding to the APP changes due to APP go-live, APP scale-out, or APP scale-in, or in the case that the port number corresponding to the APP changes, to update a local traffic steering rule of the UPF network element. The APP running on the MEP may communicate with the MEP through an Mp1 interface. The MEP can detect an operation of the locally installed APP, such as going live, getting removed, scaling-out, or scaling-in.

The APP go-live refers to an initial launch of the APP on the MEP, that is, an APP is added on the MEP. The APP scale-out refers to expanding a range of an IP address corresponding to the APP, and the APP scale-in refers to narrowing a range of an IP address corresponding to the APP.

In this embodiment, the MEP may send the traffic steering rule of the APP to the UPF network element through the following two transmission paths. On a path 1, the MEP sends the traffic steering rule of the APP to the UPF network element through a first interface between the MEP and the UPF network element, and the first interface may be an Mp2 interface. On a path 2, the MEP sends the traffic steering rule of the APP to the UPF network element via the NEF network element, the PCF network element, and the SMF network element.

The IP address and/or the port number corresponding to the APP may be understood as a matching condition or a steering policy, and the steering action corresponding to the IP address and/or the port number is used as an action corresponding to the matching condition or the steering policy. When receiving service data sent by the UE, the UPF network element matches a destination IP address and/or a destination port number in the service data with the matching condition in the traffic steering rule of the APP. If the matching succeeds, the UPF network element performs a corresponding steering action. That the matching succeeds means that the destination IP address and/or the destination port number in the service data are/is the same as an IP address and/or a port number in the matching condition.

Optionally, the traffic steering rule of the APP further includes an identifier of the traffic steering rule. The identifier of the traffic steering rule can uniquely identify one traffic steering rule. Subsequently, the traffic steering rule may be identified, updated, or deleted based on the identifier of the traffic steering rule. The identifier of the traffic steering rule may be an APP ID, or may be another identifier. This is not limited in this embodiment.

S102: The MEP receives service data that is steered by the UPF network element to the APP based on the traffic steering rule of the APP.

Optionally, before step S102, the MEP triggers the UPF network element to activate the traffic steering rule of the APP. In this embodiment, delivery and activation of the traffic steering rule of the APP may be implemented via one message, that is, the traffic steering rule of the APP is simultaneously activated when the traffic steering rule of the APP is delivered. Alternatively, the delivery and activation of the traffic steering rule of the APP may be implemented via two messages. The MEP may deliver the traffic steering rule of the APP when the APP goes live. When a UE is about to access the APP on the MEP, the traffic steering rule of the APP on the UPF network element needs to be activated first.

Activating the traffic steering rule of the APP may be understood as that the traffic steering rule of the APP is included in or installed on a rule list of a to-be-activated session by the UPF network element. The session may be a PDN session. One UE may establish one or more PDN sessions, and one rule list is correspondingly established for each session.

There is a specific effective scope of the traffic steering rule of the APP, and the UPF network element only needs to activate the traffic steering rule of the APP for a session in the effective scope, that is, include the traffic steering rule of the APP in the session list of the session in the effective scope. The effective scope of the traffic steering rule of the APP may be determined by the PCF network element, or may be determined by the UPF network element.

After the traffic steering rule of the APP is activated, that is, after the traffic steering rule of the APP is included in or installed on the rule list of the to-be-activated session, when receiving the service data sent by the UE, the UPF network element obtains packet detection information (Packet Detection Information, PDI) in the service data. The PDI includes a service data flow (service data flow, SDF) filter (filter), and the SDF filter includes identification information of the service data. The identification information may be 5-tuple information: a source IP address, a destination IP address, a source port number, a destination port number, and a protocol number. The identification information may alternatively be 4-tuple information: an IP address, a destination IP address, a source port, and a destination port.

A source IP address and a source port number of a data packet are an IP address and a port number of a UE that sends the data packet. A destination IP address and a destination port number of the data packet may be an IP address and a port number of a server that is to be accessed by the UE. Optionally, the PDI further includes an identifier of the APP.

After obtaining the PDI of the service data, the UPF network element matches or compares the destination IP address and/or the destination port number of the service data with the IP address and/or the port number included in the traffic steering rule of the APP included in the rule list of the session of the UE. If the matching succeeds, the UPF performs the steering action. That the matching succeeds means that the IP address and/or the destination port number of the service data are/is the same as an IP address and/or a port number included in a traffic steering rule of an APP included in a rule list of a session of the UE. That the UPF network element performs the steering action means that the UPF network element sends the service data to the MEP, and the APP on the MEP processes the service data.

In this embodiment, the MEP sends the traffic steering rule of the APP to the UPF network element, where the APP is installed on the MEP, and the traffic steering rule of the APP includes the IP address and/or the port number corresponding to the APP, and the steering action corresponding to the IP address/or the port number The MEP receives the service data that is steered by the UPF network element to the APP based on the traffic steering rule of the APP, and the APP processes the steered service data. In this embodiment, the traffic steering rule is delivered only for a specific session, and does not cause a signaling storm, thereby reducing impact resulting from updating of the traffic steering rule on a network.

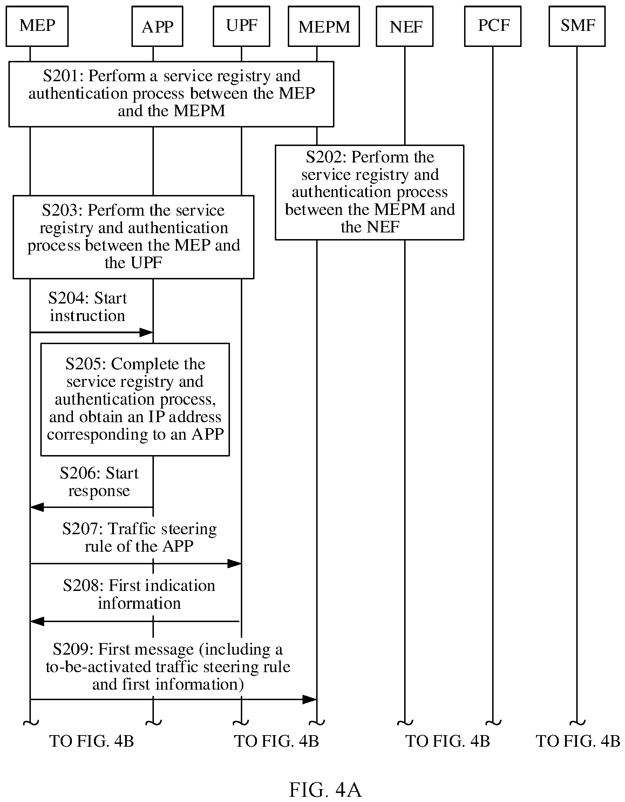

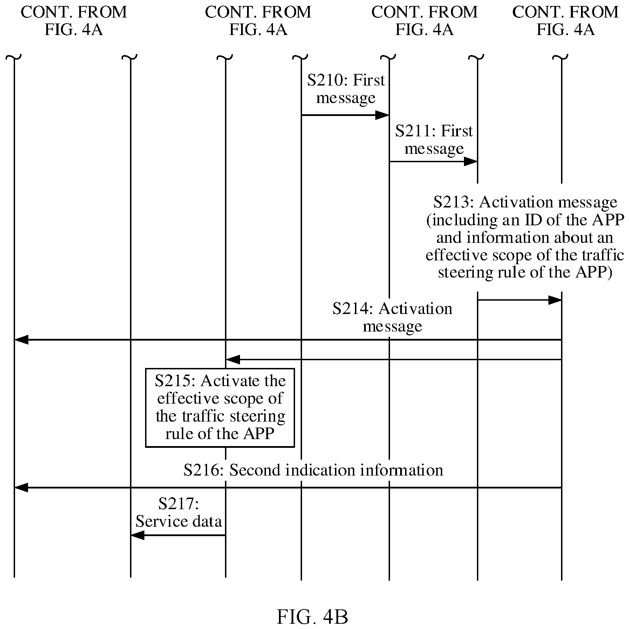

FIG. 4A and FIG. 4B are a signaling flowchart of a data steering method according to Embodiment 2 of this application. As shown in FIG. 4A and FIG. 4B, the method provided in this embodiment includes the following steps.

S201: Perform a service registry and authentication process between an MEP and an MEPM.

S202: Perform a capability exposure registry and authentication process between the MEPM and an NEF network element.

In this embodiment, after deployment for going live, the MEP and the MEPM may discover the NEF network element by querying or subscribing to an NRF network element, or may obtain an IP address of the NEF network element in a pre-configuration manner. After the NEF network element is discovered, an authentication process of the MEP or the MEPM serving as an AF in the NEF may be implemented through a service interface provided by the NEF network element. After the authentication succeeds, the MEP or the MEPM may deliver or activate the traffic steering rule via the NEF network element.

S203: Perform the service registry and authentication process between the MEP and a UPF network element.

In this embodiment, a capability exposure registry and authentication process between the MEP and the UPF is newly added. After the deployment for going live, the MEP may discover the UPF network element connected to the front end of the MEP by querying or subscribing to the NRF network element, or may obtain information about an IP address of the front-end UPF network element in a pre-configuration manner. An authentication process may be implemented mutually between the UPF network element and the MEP by using a preconfigured authentication and authorization code, to ensure that the MEP can use a capability exposed by the UPF network element: a capability for updating a traffic steering rule, or a capability for updating a mapping relationship between an APP ID and a packet or flow description information.

There is no sequence for performing step S202 and step S203.

S204: The MEP sends a start instruction to an APP through an Mp1 interface.

After receiving an APP going-live request sent by an MEC controller, the MEP sends the start instruction to the APP through the Mp 1 interface between the MEP and the APP, where the start instruction is for starting the APP. The MEP allocates an ID to the APP when the APP initially goes live and reclaims the ID allocated to the APP when the APP gets removed.

S205: Complete, after the APP is started, the service registry and authentication process, and obtain an IP address corresponding to the APP.

The IP address corresponding to the APP may be allocated by the MEP, or may be preconfigured by an operator when the APP is installed or instantiated. In the latter manner, the preconfigured IP address corresponding to the APP needs to be notified to the MEP, where the preconfigured IP address may be actively sent by the APP to the MEP.

S206: The APP returns a start response to the MEP through the Mp1 interface.

S207: The MEP sends a traffic steering rule of the APP to the UPF network element through a first interface.

When a new APP goes live on the MEP, the MEP generates a traffic steering rule of the APP based on an APP ID, an IP address and a port number corresponding to the APP, and the like. The traffic steering rule includes the APP ID, the IP address and/or the port number corresponding to the APP, and a steering action corresponding to the IP address and/or the port number. The APP ID is an identifier of the traffic steering rule, and the IP address and/or the port number corresponding to the APP is a matching condition. The MEP may send, to the UPF through the first interface, a message for adding the traffic steering rule of the APP, where the message includes the traffic steering rule of the APP, and the first interface may be an Mp2 interface.

S208: The UPF network element sends first indication information to the MEP through the first interface.

After receiving the traffic steering rule of the APP, the UPF network element adds the traffic steering rule of the APP to a local traffic steering rule, and returns the first indication information to the MEP. The first indication information indicates that the UPF network element receives the traffic steering rule of the APP or indicates that the traffic steering rule of the APP is successfully added.

Step S208 is optional. After the MEP sends the traffic steering rule of the APP, the UPF network element may alternatively receive the traffic steering rule of the APP by default after a preset time. In this case, the UPF does not need to send the first indication information to the MEP.

S209: The MEP sends a first message to the MEPM, where the first message includes an identifier of a to-be-activated traffic steering rule and first information, and the first information is used by a PCF network element to determine an effective scope of the to-be-activated traffic steering rule.

The effective scope of a traffic steering rule refers to a session of UE to which the traffic steering rule is applicable.

S210: The MEPM sends the first message to the NEF network element.

S211: The NEF network element sends the first message to the PCF network element.

S212: The PCF determines an effective scope of the traffic steering rule of the APP based on the first information.

The MEP may send the first message after the UE goes online. Herein, that the UE goes online means that the UE starts to access the APP. The first information includes location information of the MEP and/or information about a service to be accessed by the UE. The location information of the MEP may alternatively be replaced with location information of the APP. The APP is installed on the MEP. Therefore, the location information of the APP is equivalent to the location information of the MEP.

The MEP is usually deployed at a location close to a RAN. Therefore, the PCF network element may determine, based on the location information of the MEP, a session of the UE to which the traffic steering rule of the APP is applicable. The session of the UE to which the traffic steering rule of the APP is applicable is the effective scope of the traffic steering rule of the APP.

Optionally, the information about the service to be accessed by the UE includes a data network name (data network name, DNN), a slice instance ID, or single network slice selection assistance information (Single Network Slice Selection Assistance Information, S-NSSAI). The DNN is for determining a data network in which the service to be accessed by the UE is located, and the slice instance ID or the S-NSSAI is for determining a slice instance corresponding to the service to be accessed by the UE.

The PCF network element determines, based on the DNN and the slice instance ID, the data network in which the service to be accessed by the UE is located and the slice instance corresponding to the service to be accessed by the UE in the data network. Alternatively, the PCF network element determines, based on the DNN and the S-NSSAI, the data network in which the service to be accessed by the UE is located and the slice instance corresponding to the service to be accessed by the UE in the data network. A network in which service data to be accessed by the UE is located is referred to as a target network, and a slice instance that can be accessed by the UE in the target network is referred to as a target slice instance. Further, the PCF network element queries user subscription information, where the user subscription information includes subscription information of a plurality of UEs. The PCF network element determines, from the plurality of UEs based on the user subscription information, a session of target UE that can access the target data network and the target slice instance, and uses the session of the target UE as the effective scope of the traffic steering rule.

Alternatively, the PCF network element may further determine the effective scope of the traffic steering rule based on both the location information of the MEP and the information about the service to be accessed by the UE.

In this embodiment, the effective scope of the traffic steering rule determined by the PCF network element may be a session of UE in a specific user number segment, a session of UE in a specific cell, a session of UE accessed by using a specific radio access technology (radio access technology, RAT), a session of UE that uses a specific slice, a session of UE that uses a specific DN network, or the like. After determining the effective scope of the traffic steering rule, the PCF network element activates only a corresponding traffic steering rule of the session of the UE in the effective scope of the traffic steering rule, thereby reducing resource consumption of a core network element caused by activation of the traffic steering rule.

S213: The PCF network element sends an activation message to an SMF network element, where the activation message includes an ID of a to-be-activated APP and information about the effective scope of the traffic steering rule of the APP.

The activation message is for activating the to-be-activated traffic steering rule of the APP. The PCF network element may send the ID of the to-be-activated APP and the information about the effective scope of the traffic steering rule of the APP to the SMF network element based on a policy control and charging (policy control and charging, PCC) rule, where the information about the effective scope of the traffic steering rule of the APP includes an identifier of a UE session. Optionally, the activation message further includes the information about the service to be accessed by the UE.

If the activation message does not include the information about the service to be accessed by the UE, the SMF network element may further obtain, based on the identifier of the UE session, the information about the service to be accessed by the UE.

After receiving the PCC rule sent by the PCF network element, the SMF may convert the PCC rule into a packet detection rule (packet detection rule, PDR).

S214: The SMF network element sends the activation message to the UPF network element.

S215: The UPF network element activates the traffic steering rule of the APP based on the activation message

The activation message includes the PDR rule. After receiving the PDR rule, the UPF network element installs, in the rule list of the session based on the PDR rule, the traffic steering rule of the APP delivered by the MEP, to complete activation of the traffic steering rule of the APP.

In one manner, the identifier of the to-be-activated traffic steering rule is carried in activate predefined rules of the PDR rule. After receiving the PDR rule, the UPF network element installs, based on the identifier of the traffic steering rule carried in the activate predefined rules, the traffic steering rule of the APP corresponding to the identifier of the traffic steering rule in a rule list of a corresponding session.

In another manner, a to-be-activated predefined rule is carried in predefined rules of the PDR rule, where the predefined rule includes the identifier of the to-be-activated traffic steering rule and a policy, the policy is for describing path information of data steering, and the policy may include the DNN and the IP address corresponding to the APP. After receiving the PDR rule, the UPF network element installs the traffic steering rule of the APP in the rule list of the corresponding session based on the predefined rule carried in the predefined rules.

S216: The SMF network element sends second indication information to the MEP through the PCF network element, the NEF network element, and the MEMP.

The second indication information indicates that the traffic steering rule of the APP is activated. After the traffic steering rule of the APP is activated, the UPF network element may perform steering based on the traffic steering rule of the APP.

S217: The UPF network element sends service data to the APP.

When the UE accesses the APP on the MEP via the UPF network element, the UPF network element steers, to the APP on the MEP based on the traffic steering rule of the APP, service data whose IP address and/or port number are/is the same as that in the traffic steering rule. For example, the UPF network element matches a destination IP address and/or a destination port number of the service data sent by the UE with the traffic steering rule of the APP in the rule list of the session of the UE. If the matching succeeds, the service data is steered to the APP of the MEP, that is, the steered service data (that is, the successfully matched service data) is sent to the APP on the MEP, and the APP on the MEP processes the service data.

In this embodiment, the APP ID is used as the identifier of the traffic steering rule of the APP. Certainly, the identifier of the traffic steering rule of the APP may alternatively be another identifier, and this is not set in this embodiment.

In this embodiment, when an APP initially goes live on the MEP, the MEP sends the traffic steering rule of the APP to the UPF network element through the interface between the MEP and the UPF network element. When the UE accesses the APP, the MEP activates the traffic steering rule of the APP on the UPF network element through a path formed by an MEPM, an NEF network element, the PCF network element, and the SMF network element. After the traffic steering rule of the APP is activated, when the UPF network element receives service data sent by the UE, the UPF network element steers the service data, based on the IP address and/or the port number of the service data and the traffic steering rule of the APP, to the APP for execution. In the method, delivery of the traffic steering rule of the APP is implemented through the interface between the MEP and the UPF network element, thereby reducing resource consumption of the core network element caused by the delivery of the traffic steering rule. When the traffic steering rule is activated, the PCF determines the effective scope of the traffic steering rule of the APP based on the first message sent by the MEP, and subsequently activates only the traffic steering rule of the session of the UE in the effective scope of the traffic steering rule of the APP, so that activation is more targeted, thereby reducing resource consumption of the core network element caused by activation of the traffic steering rule.

This embodiment is described by using the process in which the MEP adds a new traffic steering rule for an APP newly added on the MEP as an example. In actual application, when an APP is scaled out or scaled in, or a port opened by the APP changes, the traffic steering rule of the APP, or the effective scope of the traffic steering rule of the APP needs to be updated. Updating the traffic steering rule is updating an IP address and/or a port number in the traffic steering rule. An activation process of the traffic steering rule of the APP in the foregoing procedure is also applicable to an update process of the traffic steering rule of the APP. A transmission path of a message in the update process of the traffic steering rule of the APP is the same as that in the activation process. A difference lies in that messages used between network elements in the activation process and the update process may be different.

For example, the MEP sends an update message to the PCF network element via the NEF network element, where the update message is for updating the traffic steering rule of the APP and/or the effective scope of the traffic steering rule of the APP. When the traffic steering rule of the APP is updated, the update message may include an APP ID, and an IP address and/or a port number corresponding to an updated APP, and the APP ID indicates an APP whose traffic steering rule is to be updated. When the effective scope of the traffic steering rule of the APP is updated, the MEP may include updated first information in the update message, and the PCF network element determines a new effective scope for the traffic steering rule of the APP based on the updated first information.

Similarly, the MEP may also trigger deletion of the traffic steering rule of the APP, and a transmission path of a message in a deletion process of the traffic steering rule of the APP is the same as that in the activation process. Optionally, the MEP sends a deletion message to the PCF network element via the NEF network element, where the deletion message is for deleting the traffic steering rule of the APP, the deletion message includes an identifier of the to-be-deleted traffic steering rule of the APP, and the identifier of the traffic steering rule may be an APP ID. The PCF network element may determine, based on the deletion message, UEs whose traffic steering rule corresponding to sessions of the UEs is to be deleted, and then send a deletion instruction to the SMF network element. The deletion instruction may include information about the sessions of the UEs whose traffic steering rules need to be deleted. The SMF network element sends the deletion instruction to the UPF network element, and the UPF deletes the traffic steering rule of the APP in a rule list of a corresponding session based on the deletion instruction.

When the traffic steering rule of the APP is activated, the PCF network element determines UEs whose traffic steering rules corresponding to sessions of the UEs are activated. Therefore, the PCF network element can learn of UEs whose traffic steering rules corresponding to sessions of the UEs are to be deleted.

In Embodiment 2, the traffic steering rule of the APP is generated by the MEP and sent to the UPF network element. It may be understood that the traffic steering rule of the APP may alternatively be pre-generated by the PCF network element and sent to the UPF network element.

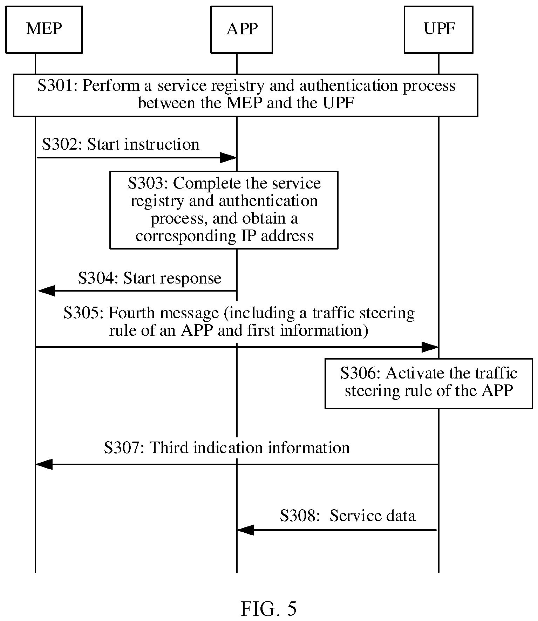

FIG. 5 is a signaling flowchart of a data steering method according to Embodiment 3 of this application. A difference between this embodiment and Embodiment 2 is that in this embodiment, both delivery and activation of a traffic steering rule of an APP are completed through an interface between an MEP and a UPF network element, and no other core network element is required. As shown in FIG. 5, the method provided in this embodiment includes the following steps.

S301: Perform a service registry and authentication process between an MEP and a UPF network element.

In this embodiment, a capability exposure registry and authentication process between the MEP and the UPF network element is newly added. After the deployment for going live, the MEP may discover the UPF network element connected to a front end of the MEP by querying or subscribing to the NRF network element, or may obtain information about an IP address of a front-end UPF network element in a pre-configuration manner. An authentication process on the UPF network element and the MEP may be implemented between the UPF network element and the MEP by using a preconfigured authentication and authorization code, to ensure that the MEP may use a capability opened by the UPF network element: a capability for updating a traffic steering rule, or a capability for updating a mapping relationship between an APP ID and a packet or flow description information.

S302: The MEP sends a start instruction to an APP through an Mp1 interface.

S303: Complete, after the APP is started, the service registry and authentication process, and obtain a corresponding IP address.

S304: The APP returns a start response to the MEP through the Mp1 interface.

S305: The MEP sends a fourth message to the UPF network element through a first interface (for example, an Mp2 interface), where the fourth message includes a traffic steering rule of the APP.

In an example manner, for the traffic steering rule of the APP received by the UPF network element, the UPF network element may determine whether to activate the traffic steering rule of the APP, and determine an effective scope of the traffic steering rule of the APP.

In another example manner, for the traffic steering rule of the APP carried in the fourth message received by the UPF network element, the traffic steering rule of the APP is activated by default, and an effective scope of the traffic steering rule of the APP is determined.

In still another example manner, activation indication information may be carried in the fourth message, and the activation indication information indicates to activate the traffic steering rule of the APP. The activation indication information may be represented by using one or more bits. For example, the activation indication information is represented by using one bit. When a value of the bit is 0 or 1, it indicates to activate the traffic steering rule of the APP.

Based on the foregoing three examples, optionally, the fourth message further includes first information. The first information is for determining an effective scope of the to-be-activated traffic steering rule, and the UPF network element determines the effective scope of the traffic steering rule of the APP based on the first information. It may be understood that the UPF network element may further determine the effective scope of the traffic steering rule of the APP in another manner, and information that the UPF determines the effective scope of the traffic steering rule of the APP may alternatively be obtained from another device. This is not limited in this embodiment.

The first information includes location information of the MEP and/or information about a service to be accessed by a UE. Optionally, the service information to be accessed by the UE includes a DNN and a slice instance ID or S-NSSAI. In this embodiment, for a manner in which the UPF network element determines the effective scope of the traffic steering rule of the APP based on the first information, refer to the manner in which the PCF network element determines the effective scope of the traffic steering rule of the APP based on the first information in Embodiment 2. Details are not described herein again.

In a possible implementation of this embodiment, the fourth message includes the traffic steering rule of the APP and the first information. After receiving the fourth message, the UPF network element determines, based on the first information, to activate the traffic steering rule of the APP, and further determines the effective scope of the traffic steering rule of the APP based on the first information.

S306: The UPF network element activates the traffic steering rule of the APP.

After determining the effective scope of the traffic steering rule of the APP, the UPF network element adds the traffic steering rule of the APP to a rule list of a session of the UE in the effective scope.

S307: The UPF network element sends third indication information to the MEP through the first interface.

The third indication information indicates that the traffic steering rule of the APP is activated, or indicates that the UPF network element receives the traffic steering rule of the APP.

S308: The UPF network element sends service data to the APP.

When the UE accesses the APP on the MEP through the UPF network element, the UPF network element sends, to the APP of the MEP based on the traffic steering rule of the APP and the IP address and/or the port number of the service data, service data that matches the traffic steering rule of the APP. For example, the UPF network element matches a destination IP address and/or a destination port number of the service data sent by the UE with the traffic steering rule of the APP in the rule list of the session of the UE. If the matching succeeds, the service data is steered to the APP of the MEP, and the APP on the MEP processes the service data.

In this embodiment, the MEP sends the fourth message to the UPF network element through the first interface between the MEP and the UPF network element, to send the traffic steering rule of the APP to the UPF network element, and activates the traffic steering rule of the APP by using the fourth message. After the traffic steering rule of the APP is activated, when the UE accesses the APP on the MEP, the UPF network element steers service data, based on the IP address and/or the port number of the service data and the traffic steering rule of the APP, to the APP on the MEP for execution. In the method, both delivery and activation of the traffic steering rule of the APP are implemented through the interface between the MEP and the UPF network element, thereby reducing resource consumption of a core network element caused by the delivery and activation of the traffic steering rule.

This embodiment is described by using the process in which the MEP adds a new traffic steering rule for an APP newly added on the MEP as an example. In an actual application, when an APP is scaled out or scaled in, or a port opened by the APP changes, the traffic steering rule of the APP, or the effective scope of the traffic steering rule of the APP needs to be updated. The foregoing procedure is also applicable to the update process of the traffic steering rule of the APP or the effective scope of the traffic steering rule of the APP. For example, the MEP sends the update message to the UPF network element through the first interface, where the update message is for updating the traffic steering rule of the APP and/or the effective scope of the traffic steering rule of the APP.

When the traffic steering rule of the APP is updated, the update message may include an APP ID, and an IP address and/or a port number corresponding to an updated APP, and the APP ID indicates an APP whose traffic steering rule is to be updated. When the effective scope of the traffic steering rule of the APP is updated, the MEP may include an updated first message in the update message, where the updated first message is used by the UPF network element to determine a new effective scope for the traffic steering rule of the APP.

Similarly, the MEP may also trigger deletion of the traffic steering rule of the APP. Optionally, the MEP sends a deletion message to the UPF network element through the first interface, where the deletion message is for deleting the traffic steering rule of the APP, the deletion message includes an identifier of the to-be-deleted traffic steering rule of the APP, and the identifier of the traffic steering rule may be an APP ID. After receiving the deletion message, the UPF network element deletes the traffic steering rule of the APP from the rule list of the session that is locally activated.

In the manner of Embodiment 3, an example in which delivery and activation of the traffic steering rule of the APP are implemented via one message is used for description. Optionally, the delivery and activation of the traffic steering rule of the APP may be implemented via two individual messages. For example, the MEP first sends a second message to the UPF network element through the first interface between the MEP and the UPF network element, where the second message includes the traffic steering rule of the APP, and the traffic steering rule of the APP further includes an identifier of the traffic steering rule. Then, the MEP sends a third message to the UPF network element through the first interface, where the third message is for activating the traffic steering rule of the APP, and the third message includes an identifier of the to-be-activated traffic steering rule of the APP.

The third message may be a dedicated message for activating the traffic steering rule of the APP. The third message may alternatively be a non-dedicated message. Activation indication information is carried in the third message, and the activation indication information indicates to activate the traffic steering rule of the APP.

Optionally, the third message further includes first information for determining an effective scope of the to-be-activated traffic steering rule, and the UPF network element determines the effective scope of the traffic steering rule of the APP based on the first information.

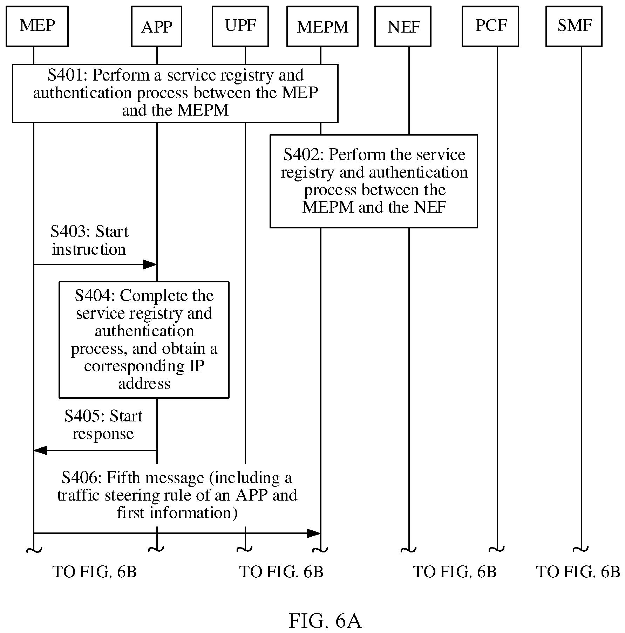

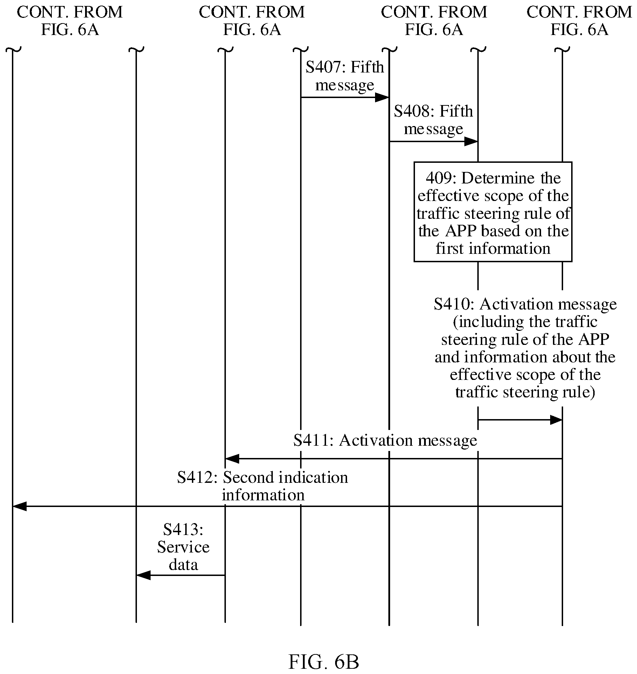

FIG. 6A and FIG. 6B are a signaling flowchart of a data steering method according to Embodiment 4 of this application. A difference between this embodiment and Embodiment 1 is that in this embodiment, both delivery and activation of a traffic steering rule of an APP are completed by a core network element such as an NEF network element or a PCF network element. As shown in FIG. 6A and FIG. 6B, the method provided in this embodiment includes the following steps.

S401: Perform a service registry and authentication process between an MEP and an MEPM.

S402: Perform a capability exposure registry and authentication process between the MEPM and the NEF network element.

S403: The MEP sends a start instruction to an APP through an Mp1 interface.

S404: Complete, after the APP is started, the service registry and authentication process, and obtain a corresponding IP address.

S405: The APP returns a start response to the MEP through the Mp1 interface.

S406: The MEP sends a fifth message to the MEPM, where the fifth message includes a traffic steering rule of an APP and first information, and the first information is used by the PCF network element to determine an effective scope of the traffic steering rule of the APP.

S407: The MEPM sends the fifth message to the NEF network element.

S408: The NEF sends the fifth message to the PCF.

Optionally, the traffic steering rule of the APP includes an identifier of a traffic steering rule.

S409: The PCF network element determines the effective scope of the traffic steering rule of the APP based on the first information.

After receiving the fifth message, the PCF network element determines the effective scope of the traffic steering rule of the APP based on the first information carried in the fifth message. The first information includes location information of the MEP and/or information about a service to be accessed by a UE. Optionally, the service information to be accessed by the UE includes a DNN and a slice instance ID or S-NSSAI.

The fifth message is further for triggering activation of the traffic steering rule of the APP. In an implementation, the traffic steering rule of the APP is implicitly activated by using the first information. To be specific, after receiving the fifth message, the PCF network element determines, based on the first information, that the traffic steering rule of the APP needs to be activated. In another implementation, the fifth message includes the first information and activation indication information. The PCF network element determines, based on the activation indication information, to activate the traffic steering rule of the APP, and then determines the effective scope of the traffic steering rule of the APP based on the first information.

S410: The PCF network element sends an activation message to an SMF network element, where the activation message includes the traffic steering rule of the APP and information about the effective scope of the traffic steering rule of the APP.

The activation message is for activating the to-be-activated traffic steering rule of the APP

S411: The SMF network element sends the activation message to the UPF network element.

The activation message sent by the SMF network element includes a PDR rule. After receiving the PDR rule, the UPF network element installs, in a rule list of a session based on the PDR rule, the traffic steering rule of the APP delivered by the MEP, to complete activation of the traffic steering rule of the APP.

S412: The SMF network element sends second indication information to the MEP through the PCF network element, the NEF network element, and the MEMP.

The second indication information indicates that the traffic steering rule of the APP is activated, or indicates that the traffic steering rule of the APP is received, or indicates that the traffic steering rule of the APP is added. After the traffic steering rule of the APP is activated, the UPF network element may perform steering based on the traffic steering rule of the APP.

S413: The UPF network element sends service data to the APP.

After the traffic steering rule of the APP is activated, the UPF network element steers the service data to the APP of the MEP based on the traffic steering rule of the APP, and an IP address and/or a port number of the service data.

In this embodiment, the MEP delivers and activates the traffic steering rule of the APP through a path formed by the MEPM, the NEF network element, the PCF network element, and the SMF network element. After the traffic steering rule of the APP is activated, when the UE accesses a service on the APP on the MEP, the UPF network element steers service data, based on the IP address and/or the port number of the service data sent by the UE and the traffic steering rule of the APP, to the APP on the MEP. In this manner, the first information is carried when the traffic steering rule of the APP is delivered, so that the PCF network element can accurately determine the effective scope of the traffic steering rule of the APP based on the first information, and deliver the traffic steering rule of the APP based on the effective scope. Therefore, a signaling storm is not caused, and impact resulting from updating of the traffic steering rule on a network is reduced.

In the manner of Embodiment 4, an example in which delivery and activation of the traffic steering rule of the APP are implemented via one message is used for description. Optionally, the delivery and activation of the traffic steering rule of the APP may alternatively be implemented via two individual messages. For example, the MEP separately sends two messages through the path formed by the MEPM, the NEF network element, the PCF network element, and the SMF network element. One message is for delivering the traffic steering rule of the APP, and the other message is for activating the traffic steering rule of the APP.

Embodiment 5 of this application provides an MEP. The MEP includes functional modules configured to implement the methods performed by the MEP in Embodiment 1 to Embodiment 4.

Embodiment 6 of this application provides a UPF network element. The UPF includes functional modules configured to implement the methods performed by the UPF network element in Embodiment 1 to Embodiment 4.

Embodiment 7 of this application provides a PCF network element. The PCF network element includes functional modules configured to implement the methods performed by the PCF network element in Embodiment 1 to Embodiment 4.

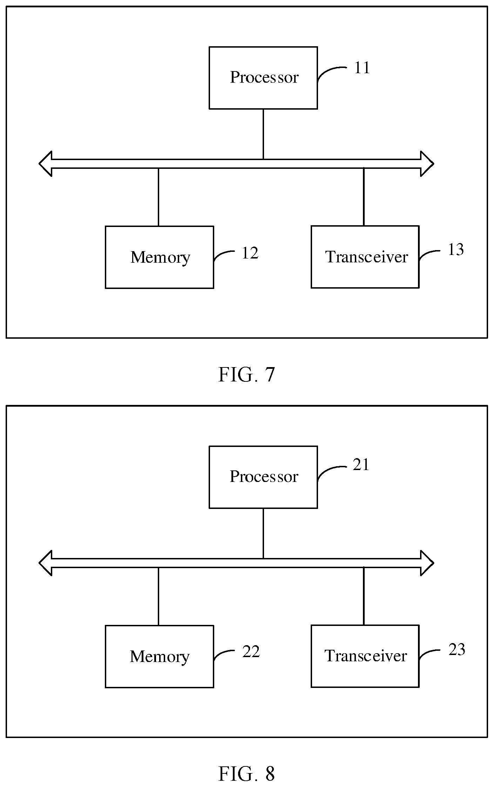

FIG. 7 is a schematic diagram of a structure of an MEP according to Embodiment 8 of this application. As shown in FIG. 7, the MEP includes a processor 11, a memory 12, and a transceiver 13. The memory 12 is configured to store instructions. The transceiver 13 is configured to communicate with another device. The processor 11 is configured to execute the instructions stored in the memory 12, to enable the MEP to perform the method steps performed by the MEP in Embodiment 1 to Embodiment 4. A specific implementation and technical effect are similar, and details are not described herein again.

FIG. 8 is a schematic diagram of a structure of a UPF network element according to Embodiment 9 of this application. As shown in FIG. 8, the UPF network element includes a processor 21, a memory 22, and a transceiver 23. The memory 22 is configured to store instructions, the transceiver 23 is configured to communicate with another device, and the processor 21 is configured to execute the instructions stored in the memory 22, to enable the UPF to perform the method steps performed by the UPF network element in Embodiment 1 to Embodiment 4. A specific implementation and technical effect are similar, and details are not described herein again.

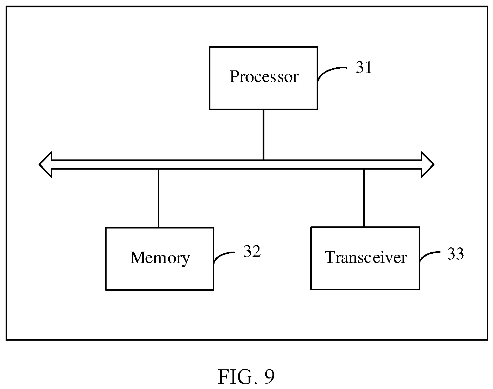

FIG. 9 is a schematic diagram of a structure of a PCF network element according to Embodiment 10 of this application. As shown in FIG. 9, the PCF network element includes a processor 31, a memory 32, and a transceiver 33. The memory 32 is configured to store instructions. The transceiver 32 is configured to communicate with another device. The processor 31 is configured to execute the instructions stored in the memory 32, to enable the PCF network element to perform the method steps performed by the PCF network element in Embodiment 1 to Embodiment 4. A specific implementation and technical effect are similar, and details are not described herein again.

Embodiment 11 of this application provides a computer-readable storage medium, used in an MEP. The computer-readable storage medium stores instructions. When the instructions are executed by a computing apparatus, the MEP is enabled to perform the method steps performed by the MEP in Embodiment 1 to Embodiment 4. A specific implementation and technical effect are similar, and details are not described herein again.

Embodiment 12 of this application provides a computer-readable storage medium, used in a UPF network element. The computer-readable storage medium stores instructions. When the instructions are executed by a computing apparatus, the UPF network element is enabled to perform the method steps performed by the UPF network element in Embodiment 1 to Embodiment 4. A specific implementation and technical effect are similar, and details are not described herein again.

Embodiment 13 of this application provides a computer-readable storage medium, used in a PCF network element. The computer-readable storage medium stores instructions. When the instructions are executed by a computing apparatus, the PCF network element is enabled to perform the method steps performed by the PCF network element in Embodiment 1 to Embodiment 4. A specific implementation and technical effect are similar, and details are not described herein again.

The processor in embodiments may be a general purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished using a hardware decoding processor, or may be executed and accomplished by using a combination of hardware and software modules in the decoding processor. A software module may be located in a mature storage medium in the art, such as a random access memory (Random Access Memory, RAM), a flash memory, a read-only memory (Read-Only Memory, ROM), a programmable read-only memory, an electrically erasable programmable memory, a register, or the like. The storage medium is located in a memory 1002. A processor 1001 reads an instruction from the memory 1002, and completes the steps of the foregoing methods in combination with the hardware.

The bus in this application may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, the bus in the accompanying drawings in this application is not limited to only one bus or only one type of bus.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented as hardware, or may be implemented as a combination of hardware and a software functional unit.

## Claims

1. A data steering method, comprising:
sending, by a mobile edge computing platform, a traffic steering rule of an application APP to a user plane function network element, wherein the APP is installed on the mobile edge computing platform, and the traffic steering rule of the APP comprises an Internet Protocol IP address and/or a port number corresponding to the APP, and a steering action corresponding to the IP address and/or the port number; and
receiving, by the mobile edge computing platform, service data that is steered by the user plane function network element to the APP based on the traffic steering rule of the APP.

2. The method according to claim 1, wherein before the receiving, by the mobile edge computing platform, service data that is steered by the user plane function network element to the APP based on the traffic steering rule of the APP, the method further comprises:
triggering, by the mobile edge computing platform, the user plane function network element to activate the traffic steering rule of the APP.

3. The method according to claim 2, wherein the sending, by a mobile edge computing platform, a traffic steering rule of an APP to a user plane function network element comprises:
sending, by the mobile edge computing platform, the traffic steering rule of the APP through a first interface between the mobile edge computing platform and the user plane function network element, wherein the traffic steering rule of the APP further comprises an identifier of the traffic steering rule; and
the triggering, by the mobile edge computing platform, the user plane function network element to activate the traffic steering rule of the APP comprises:
sending, by the mobile edge computing platform, an identifier of a to-be-activated traffic steering rule and first information to a policy control network element via a network exposure function network element, wherein the first information is used by the policy control network element to determine an effective scope of the to-be-activated traffic steering rule.

4. The method according to claim 2, wherein the sending, by a mobile edge computing platform, a traffic steering rule of an APP installed on the mobile edge computing platform to a user plane function network element comprises:
sending, by the mobile edge computing platform, a fifth message to a policy control network element via a network exposure function network element, wherein the fifth message comprises the traffic steering rule of the APP and first information, and the first information is used by the policy control network element to determine an effective scope of the traffic steering rule of the APP; and
the triggering, by the mobile edge computing platform, the user plane function network element to activate the traffic steering rule of the APP comprises:
triggering, by the mobile edge computing platform by using the fifth message, the user plane function network element to activate the traffic steering rule of the APP.

5. The method according to claim 3, wherein after the sending, by the mobile edge computing platform, the traffic steering rule of the APP through a first interface between the mobile edge computing platform and the user plane function network element, the method further comprises:
receiving, by the mobile edge computing platform, first indication information sent by the user plane function network element through the first interface, wherein the first indication information indicates that the user plane function network element receives the traffic steering rule of the APP.

6. The method according to any one of claims 3 to 5, further comprising:
receiving, by the mobile edge computing platform, second indication information sent by a session management function network element, wherein the second indication information indicates that the traffic steering rule of the APP is activated.

7. The method according to claim 3, further comprising:
performing, by the mobile edge computing platform, service registry and authentication with the user plane function network element.

8. The method according to claim 3 or 4, further comprising:
performing, by the mobile edge computing platform, service registry and authentication with the network exposure function network element via a mobile edge computing platform manager.

9. The method according to claim 3 or 4, further comprising:
sending, by the mobile edge computing platform, an update message to the policy control network element via the network exposure function network element, wherein the update message is for updating the traffic steering rule of the APP and/or the effective scope of the traffic steering rule of the APP.

10. The method according to claim 3 or 4, further comprising:
sending, by the mobile edge computing platform, a deletion message to the policy control network element via the network exposure function network element, wherein the deletion message is for deleting the traffic steering rule of the APP.

11. The method according to claim 2, wherein the sending, by a mobile edge computing platform, a traffic steering rule of an APP installed on the mobile edge computing platform to a user plane function network element comprises:
sending, by the mobile edge computing platform, a second message to the user plane function network element through a first interface between the mobile edge computing platform and the user plane function network element, wherein the second message comprises the traffic steering rule of the APP, and the traffic steering rule of the APP further comprises an identifier of the traffic steering rule; and
the triggering, by the mobile edge computing platform, the user plane function network element to activate the traffic steering rule of the APP comprises:
sending, by the mobile edge computing platform, a third message to the user plane function network element through the first interface, wherein the third message is for activating the traffic steering rule of the APP, and the third message comprises an identifier of the to-be-activated traffic steering rule of the APP.

12. The method according to claim 11, wherein the third message further comprises first information, and the first information is used by the user plane function network element to determine an effective scope of the to-be-activated traffic steering rule.

13. The method according to claim 2, wherein the sending, by a mobile edge computing platform, a traffic steering rule of an APP to a user plane function network element comprises:
sending, by the mobile edge computing platform, a fourth message to the user plane function network element through a first interface between the mobile edge computing platform and the user plane function network element, wherein the fourth message comprises the traffic steering rule of the APP; and
the triggering, by the mobile edge computing platform, the user plane function network element to activate the traffic steering rule of the APP comprises:
triggering, by the mobile edge computing platform by using the fourth message, the user plane function network element to activate the traffic steering rule of the APP.

14. The method according to claim 13, wherein the fourth message further comprises first information, and the first information is used by the user plane function network element to determine an effective scope of the to-be-activated traffic steering rule.

15. The method according to claim 13, wherein the fourth message further comprises activation indication information, and the activation indication information indicates to activate the traffic steering rule of the APP.

16. The method according to any one of claims 11 to 15, further comprising:
receiving, by the mobile edge computing platform through the first interface, third indication information sent by the user plane function network element, wherein the third indication information indicates that the traffic steering rule of the APP is activated.

17. The method according to any one of claims 11 to 16, further comprising:
performing, by the mobile edge computing platform, service registry and authentication with the user plane function network element.

18. The method according to any one of claims 3, 4, 12, and 14, wherein the first information comprises location information of the mobile edge computing platform and/or information about a service to be accessed by UE.

19. The method according to claim 18, wherein the information about the service to be accessed by the UE comprises a data network name DNN and a slice instance ID or single network slice selection assistance information S-NSSAI.

20. The method according to any one of claims 11 to 17, further comprising:
sending, by the mobile edge computing platform, an update message to the user plane function network element through the first interface, wherein the update message is for updating a matching condition and/or an effective scope of the traffic steering rule of the APP.

21. The method according to any one of claims 11 to 17, further comprising:
sending, by the mobile edge computing platform, a deletion message to the user plane function network element through the first interface, wherein the deletion message is for deleting the traffic steering rule of the APP.

22. A data steering method, comprising:
obtaining, by a user plane function network element, a traffic steering rule of an application APP, wherein the APP is installed on a mobile edge computing platform, and the traffic steering rule of the APP comprises an IP address and/or a port number corresponding to the APP, and a steering action corresponding to the IP address and/or the port number; and
sending, by the user plane function network element when receiving service data sent by user equipment, the service data to the APP based on an IP address and/or a port number of the service data and the traffic steering rule of the APP.

23. The method according to claim 22, wherein before the sending the service data to the APP based on an IP address and/or a port number of the service data and the traffic steering rule of the APP, the method further comprises:
activating, by the user plane function network element, the traffic steering rule of the APP.

24. The method according to claim 23, wherein the obtaining, by a user plane function network element, a traffic steering rule of an APP comprises:
receiving, by the user plane function network element, the traffic steering rule of the APP through a first interface between the user plane function network element and the mobile edge computing platform, wherein the traffic steering rule of the APP further comprises an identifier of the traffic steering rule; and
the activating, by the user plane function network element, the traffic steering rule of the APP comprises:
receiving, by the user plane function network element, an activation message sent by a policy control network element, wherein the activation message is for activating the traffic steering rule of the APP, and the activation message comprises an identifier of the traffic steering rule of the APP; and
activating, by the user plane function network element, the traffic steering rule of the APP based on the activation message

25. The method according to claim 23, wherein the obtaining, by a user plane function network element, a traffic steering rule of an APP comprises:
receiving, by the user plane function network element, the traffic steering rule of the APP sent by a policy control network element, wherein the traffic steering rule of the APP further comprises an identifier of the traffic steering rule, and the traffic steering rule of the APP is generated by the policy control network element, or the traffic steering rule of the APP is generated by the mobile edge computing platform and sent to the policy control network element; and
the activating, by the user plane function network element, the traffic steering rule of the APP comprises:
receiving, by the user plane function network element, an activation message sent by the policy control network element, wherein the activation message is for activating the traffic steering rule of the APP, and the activation message comprises an identifier of the traffic steering rule of the APP; and
activating, by the user plane function network element, the traffic steering rule of the APP based on the activation message

26. The method according to claim 24 or 25, wherein the activation message further comprises first information, and the first information is used by the user plane function network element to determine an effective scope of the to-be-activated traffic steering rule.

27. The method according to any one of claims 24 to 26, further comprising:
receiving, by the user plane function network element, an update message sent by the policy control network element, wherein the update message is for updating the traffic steering rule of the APP and/or the effective scope of the traffic steering rule of the APP.

28. The method according to any one of claims 24 to 26, further comprising:
receiving, by the user plane function network element, a deletion message sent by the policy control network element, wherein the deletion message is for deleting the traffic steering rule of the APP.

29. The method according to claim 22, wherein the obtaining, by a user plane function network element, a traffic steering rule of an APP comprises:
receiving, by the user plane function network element through a first interface between the user plane function network element and the mobile edge computing platform, a second message sent by the mobile edge computing platform, wherein the second message comprises the traffic steering rule of the APP, and the traffic steering rule of the APP further comprises an identifier of the traffic steering rule; and
the activating, by the user plane function network element, the traffic steering rule of the APP comprises:
receiving, by the user plane function network element through the first interface, a third message sent by the mobile edge computing platform, wherein the third message is for activating the traffic steering rule of the APP, and the third message comprises an identifier of the to-be-activated traffic steering rule of the APP; and
activating, by the user plane function network element, the traffic steering rule of the APP based on the third message

30. The method according to claim 29, wherein the third message further comprises first information, and the first information is used by the user plane function network element to determine an effective scope of the to-be-activated traffic steering rule.

31. The method according to claim 22, wherein the obtaining, by a user plane function network element, a traffic steering rule of an APP comprises:
receiving, by the user plane function network element through a first interface between the user plane function network element and the mobile edge computing platform, a fourth message sent by the mobile edge computing platform, wherein the fourth message comprises the traffic steering rule of the APP; and
the activating, by the user plane function network element, the traffic steering rule of the APP comprises:
activating, by the user plane function network element, the traffic steering rule of the APP based on the fourth message

32. The method according to claim 31, wherein the fourth message further comprises first information, and the first information is used by the user plane function network element to determine an effective scope of a to-be-activated traffic steering rule.

33. The method according to any one of claims 29 to 32, further comprising:
receiving, by the user plane function network element through the first interface, an update message sent by the mobile edge computing platform, wherein the update message is for updating a matching condition and/or an effective scope of the traffic steering rule of the APP.

34. The method according to any one of claims 29 to 32, further comprising:
receiving, by the user plane function network element through the first interface, a deletion message sent by the mobile edge computing platform, wherein the deletion message is for deleting the traffic steering rule of the APP.

35. The method according to any one of claims 26, 30, and 32, wherein the first information comprises location information of the mobile edge computing platform and/or information about a service to be accessed by the UE.

36. The method according to claim 35, wherein the information about the service to be accessed by the UE comprises a data network name DNN and a slice instance ID or single network slice selection assistance information S-NSSAI.

37. A data steering method, comprising:
receiving, by a policy control network element from a network exposure function network element, a first message sent by a mobile edge computing platform, wherein the first message comprises an identifier of a to-be-activated traffic steering rule of an APP and first information;
determining, by the policy control network element, an effective scope of the traffic steering rule of the APP based on the first information; and
sending, by the policy control network element, an activation message to a session management function network element, wherein the activation message comprises the identifier of the to-be-activated traffic steering rule of the APP and information about the effective scope of the traffic steering rule of the APP.

38. The method according to claim 37, wherein the first information comprises location information of the mobile edge computing platform and/or information about a service to be accessed by UE.

39. The method according to claim 38, wherein the information about the service to be accessed by the UE comprises a data network name DNN and a slice instance ID or single network slice selection assistance information S-NSSAI.

40. The method according to claim 37, further comprising:
generating, by the policy control network element, the traffic steering rule of the APP; and
sending, by the policy control network element, the traffic steering rule of the APP to a user plane function network element.

41. The method according to claim 37, further comprising:
receiving, by the policy control network element, the traffic steering rule of the APP sent by the mobile edge computing platform; and
sending, by the policy control network element, the traffic steering rule of the APP to a user plane function network element.

42. An apparatus, wherein the apparatus is configured to perform the method according to any one of claims 1 to 21.

43. An apparatus, wherein the apparatus is configured to perform the method according to any one of claims 22 to 36.

44. An apparatus, wherein the apparatus is configured to perform the method according to any one of claims 37 to 41.
